# EUROPEAN PATENT APPLICATION

(11) **EP 4 403 271 A1**
(43) Date of publication of application: **24.07.2024**
(21) Application number: 23220737.3
(22) Date of filing: 29.12.2023
(51) Int. Cl.: B08B 9/032, B60K 1/00, F25B 45/00

(54) **CLEANING SYSTEM FOR AN ELECTRIC AXLE FOR A VEHICLE AND RELATED CLEANING METHOD**

(30) Priority: 30.12.2022 IT 202200027384
(71) Applicant: FPT Industrial S.p.A., 10156 Torino (IT)
(72) Inventor: KONOPACK, Brian Douglas, 10156 TORINO (IT); TATE, Ivan, 10156 TORINO (IT); MALLELA, Rajeev, 10156 TORINO (IT); FRANCO RIVAS, Vinicio Aaron, 10156 TORINO (IT)
(74) Representative: Studio Torta S.p.A.

(57) **Abstract**

Cleaning system (1) for cleaning a conditioning system of an e-axle (A),comprising a plurality of tanks (T', T", T‴) configured to store a respective cleaning fluid and a hydraulic arrangement (2) configured to fluidly connect the plurality of tanks (T', T", T‴) and the e-axle (A), the hydraulic arrangement (2) comprising pumping means (9), a filtering portion (12) and a compressed air source (16) that are fluidly connected together among the plurality of tanks (T', T", T‴) and the e-axle (A) to provide different cleaning operations for cleaning the conditioning system of an e-axle (A).

## Description

### CROSS-REFERENCE TO RELATED APPLICATIONS

This patent application claims priority from Italian patent application no. 102022000027384 filed on December 30, 2022, the entire disclosure of which is incorporated herein by reference.

### TECHNICAL FIELD

The present invention concerns a cleaning system for an electric axle for a vehicle.

The present invention finds its preferred, although not exclusive, application in electric axles for heavy vehicles such as trucks. Reference will be made to this application by way of example below.

### BACKGROUND OF THE INVENTION

Reduction of automotive fuel consumption and emissions is an ongoing process involving several areas of technology. One such area involves electrified vehicles or vehicles, including cars and trucks, powered either entirely or in hybrid fashion by electric machines or electric motors.

In general, electrified vehicles differ from conventional carbon-based fuel powered motor vehicles in that they are powered by one or more battery powered electric machines (i.e. electric motors or generators).

The electric machines of electrified vehicles are typically connected to a transmission or similar gearboxes, including differential mechanisms, that include relatively complex gearing arrangements. Such assemblies are usually known as e-axles.

Such e-axles comprises conditioning systems for maintaining the electric machines temperature within a preset range during the operation of the vehicle. Indeed, there may be need of cooling or of heating the electric machine according to required loads and environmental temperature.

Periodically there is need to clean the conditioning system for the electric machines of the e-axles in order to guarantee proper thermo-hydraulic behavior of such conditioning system.

However, such cleaning operation is long and requires complex operations.

Therefore, the need is felt to provide a system for cleaning an e-axle for a vehicle that is quick, easy to use and cost-effective.

An aim of the present invention is to satisfy the above mentioned needs in an optimized and cost-effective way.

### SUMMARY OF THE INVENTION

The aforementioned aim is reached by a cleaning system and a cleaning method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a cleaning system according to a first embodiment of the invention;
- Figures 1A-1D are schematic representation indicating fluid movements with respect to the schematic of the cleaning system of figure 1;
- Figure 2 is a schematic representation of a cleaning system according to a second embodiment of the invention; and
- Figures 2A-2C are schematic representation indicating fluid movements with respect to the schematic of the cleaning system of figure 2.

### DETAILED DESCRIPTION OF THE INVENTION

Reference number 1 generally indicates in the two embodiments of the invention a system for cleaning an e-axle A of a vehicle, such as a truck comprising at least an electric machine. The E-axle A of the disclosed embodiments comprises, exemplarily, a pair of machines.

The cleaning system 1 comprises essentially a plurality of tanks T', T", T‴ and a hydraulic arrangement 2 fluidly interposed between the plurality of tanks T', T", T‴ and the e-axle A. Each tank T', T", T‴ is provided with a vent valve (not shown) configured to allow venting of the tank, if needed.

The hydraulic arrangement 2 comprises a main feeding conduit 3 configured to fluidly connect tanks T', T", T‴ to the e-axle A, namely, according to the shown embodiment, to a pair of conduits 3', 3" fluidly connectable to inlet openings I', I" realized on the e-axle A, in particular to it electric machines in order to reach the conditioning system thereof, more in particular their cooling jacket.

The hydraulic arrangement 2 further a main return conduit 4 configured to fluidly connect tanks T', T", T‴ to the e-axle A, namely, according to the shown embodiment, to a pair of conduits 4', 4" fluidly connectable to outlet openings O', O" realized on the e-axle A, and, similarly to the preceding, in particular to it electric machines in order to reach the conditioning system thereof, more in particular their cooling jacket.

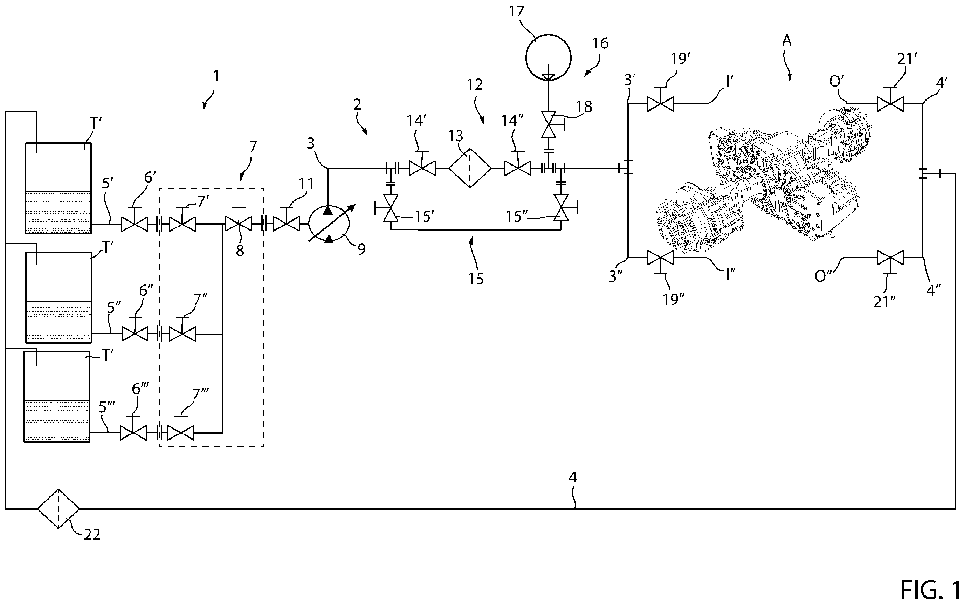

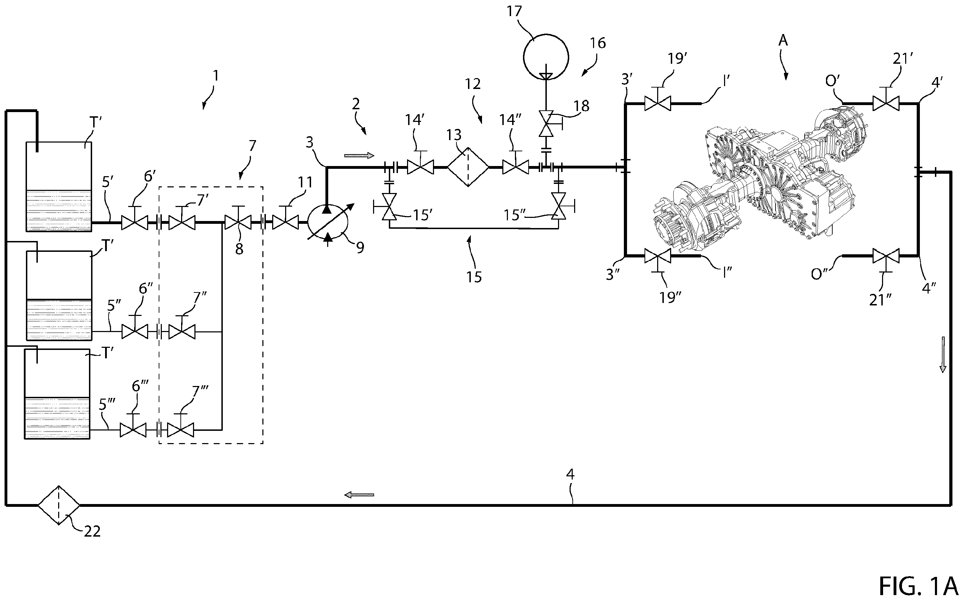

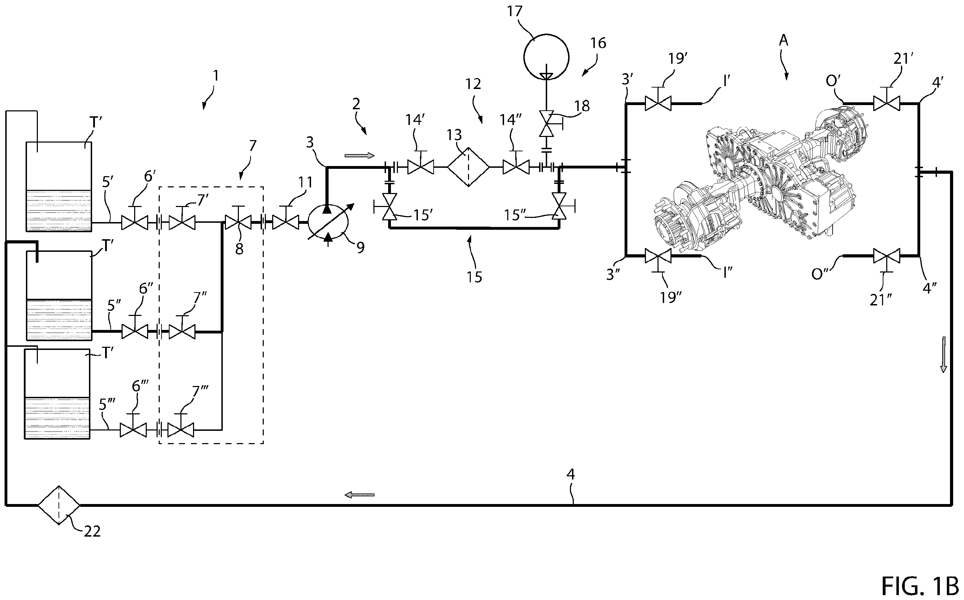

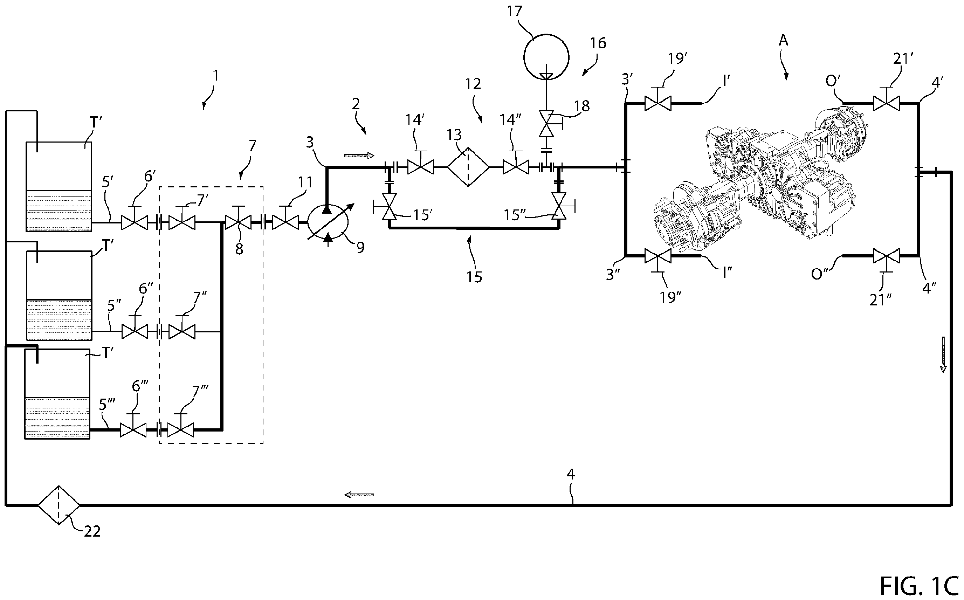

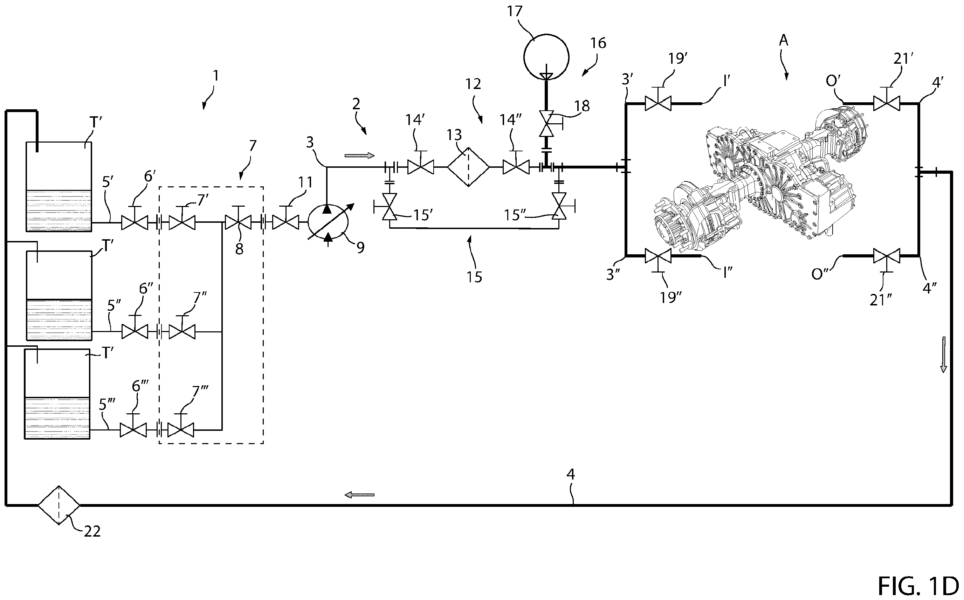

Referring to the first embodiment of the invention, shown in figure 1, each tank T', T", T‴ is fluidly connected to the main feeding conduit 3 via a respective hose 5', 5", 5‴ that is connectable via respective first valve means 6', 6", 6‴ to a supply module 7.

Supply module 7 comprises respective second valve means 7', 7", 7‴ configured to be respectively fluidly connected to hose 5', 5", 5‴ each fluidly connected to conduit 3. Downstream to second valve means 7', 7", 7‴ the supply module 7 further comprises a third valve means 8 interposed between the second valve means 7', 7", 7‴ and conduit 3.

Hydraulic arrangement 2 further comprises pump means 9 fluidly interposed on main feeding conduit 3 downstream to supply module 7. In particular, the hydraulic arrangement 2 may comprise fourth valve means 11 fluidly interposed between the pump means 9 and the supply module 7.

Hydraulic arrangement 2 then comprises a filtering portion 12 comprising filtering means 13 fluidly interposed between the pumping means 9 and the conduits 4', 4" and configured to filter the fluid pumped by pumping means 9 before injecting into e-axle A via inlet openings I', I".

Filtering portion 12 further comprises a pair of fifth valves 14', 14" of which one is fluidly interposed on main feeding conduit 3 upstream to filtering means 13 and the other one is fluidly interposed on main feeding conduit 3 downstream to filtering means 13.

Hydraulic arrangement 2 further comprises a by-pass portion 15 configured to fluidly bypass the filtering portion 12 in order to allow direct fluidic communication from pumping means 9 to inlet openings I', I" without passing from filter means 13, if requested. In detail, the by-pass portion 15 comprises a by-pass conduit provided with a pair of sixth valves 15', 15" fluidly in series one with respect to the other.

Hydraulic arrangement 2 further comprises a compressed air source 16 configured to be selectively fluidly connected to main conduit 3 downstream to filtering portion 12 in order to inject compressed air towards e-axle inlet openings I', I".

The compressed air source 16 advantageously comprise air pumping means 17 fluidly connectable by seventh valve means 18 to the main feeding conduit 3.

In particular, it should be noticed that the seventh valve means 18 are fluidly connected downstream to filtering portion 12 but upstream with respect to the fluid connection of the by-pass portion 15 to main feeding conduit 3.

The hydraulic arrangement 2 further comprises eighth and ninth valve means 19', 19", 21', 21" respectively positioned upstream to inlet openings I', I" and downstream to outlet openings O', O".

Further, the hydraulic arrangement 2 further comprises filtering means 22 fluidly interposed on main return conduit 4 upstream to the plurality of tanks T', T", T‴. preferably such filtering means 22 comprises an inspection portion, e.g. a transparent portion, to understand the quality and the presence of fluid passing therethrough.

Optionally, a bypass portion (not shown) may be comprised to exclude the passage of water within filtering means 22, if needed, to reduce required cleaning fluid amount and to reduce time needed for cleaning.

The aforementioned valves are preferably ON-OFF two ways - two positions valves electrically controlled in order to provide a cleaning method as described in the following.

The operation of the embodiment of the invention as described above is the following.

Referring to figure 1A a cleaning operation is shown wherein the fluid contained in first tank T', that is heated at a preset temperature, e.g. comprised between 70-90 °C, for instance a liquid compound known with commercial name of "Restore Plus" is make circulate within electric machine cooling system. In such occurrence valves 6', 7', 8, 11, 14', 14", 18, 19" are controlled to allow passage of cleaning fluid through pumping means 9 and filtering means 13 and then to the e-axle A. The cooling fluid will corrode possible dirty deposition in the cooling jacket of the electric machine/s and the filtering means will collect such debris. The cleaning operation is caried out for the time needed in function of the typology and number of electric machines, e.g. 2 hours.

Referring to figure 1B a further cleaning operation is shown wherein the fluid contained in second tank T", for instance water. In such occurrence valves 6', 7', 8, 11, 14', 14", 16', 19" are controlled to allow passage of cleaning fluid through pumping means 9 and bypass portion 15 and then to the e-axle A. The water will eliminate further debris contained in the conditioning system and, moreover, eliminate any residual of cleaning fluid. The cleaning operation is caried out for the time needed in function of the typology and number of electric machines, e.g. 5 minutes.

Referring to figure 1C a filling operation is shown wherein the fluid contained in third tank T", such as a cooling fluid, e.g. under commercial name of "Xerex". In such occurrence valves 6', 7', 8, 11, 14', 14", 16', 19" are controlled to allow passage of cleaning fluid through pumping means 9 and bypass portion 15 and then to the e-axle A. The operation will be carried out till filling completely the conditioning system for the electric machine of the e-axle A.

Referring to figure 1D a purging operation is shown wherein the compressed air from compressed air means 16 is make circulate within e-axle conditioning system to eliminate the presence of the fluid precedingly flowing therein. In such occurrence valves 6', 7', 8, 11, 14', 14", 16', 19" are controlled to allow passage of air from compressed air means 16 towards e-axle A and then to one of tanks T', T", T‴ for discharge. The operation will be carried out till any indication of fluid is completely out of the conditioning system for the electric machine of the e-axle A.

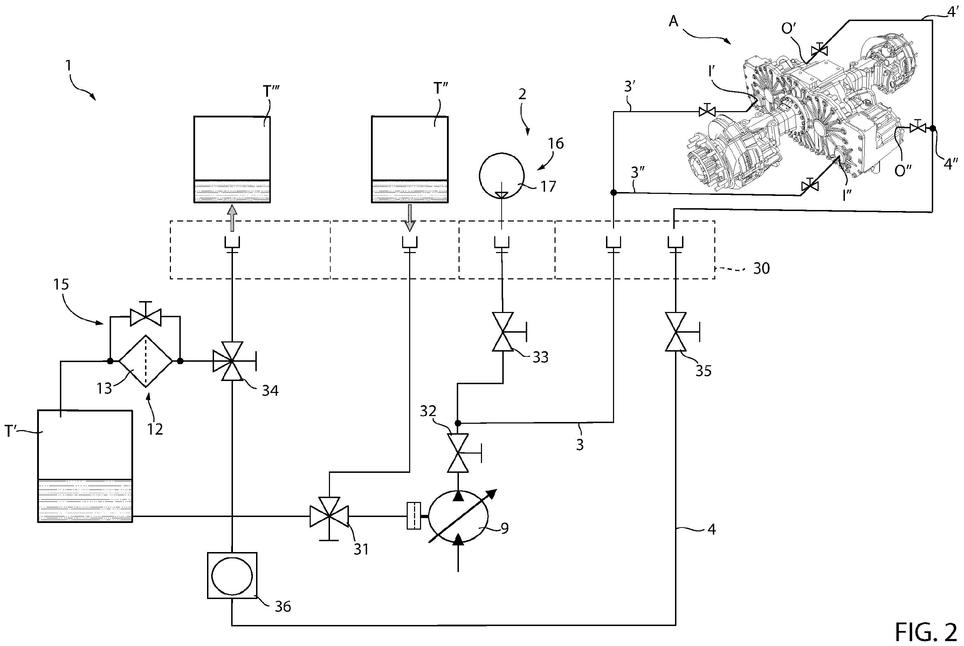

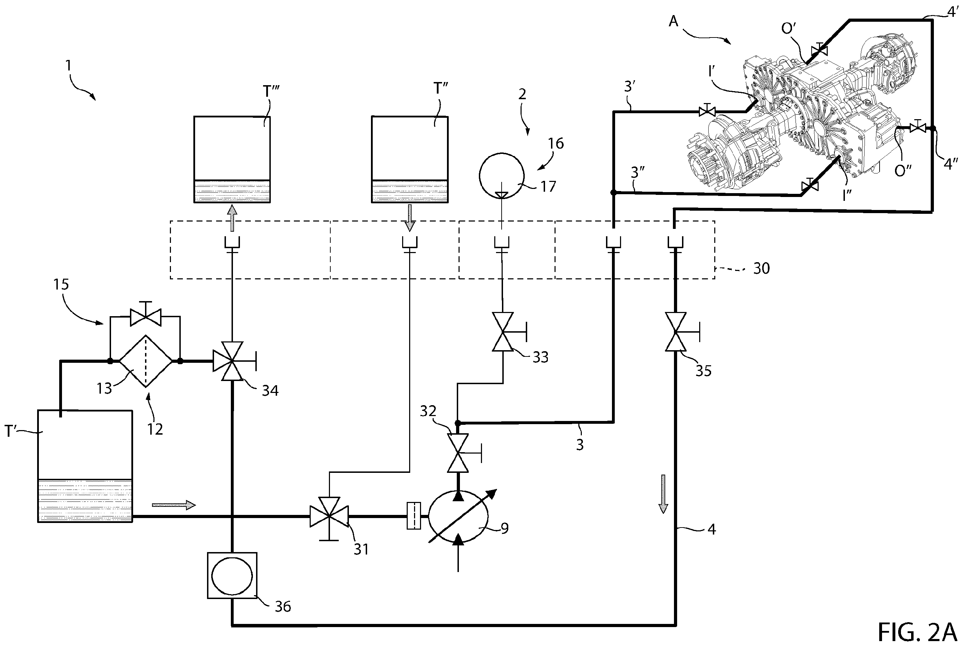

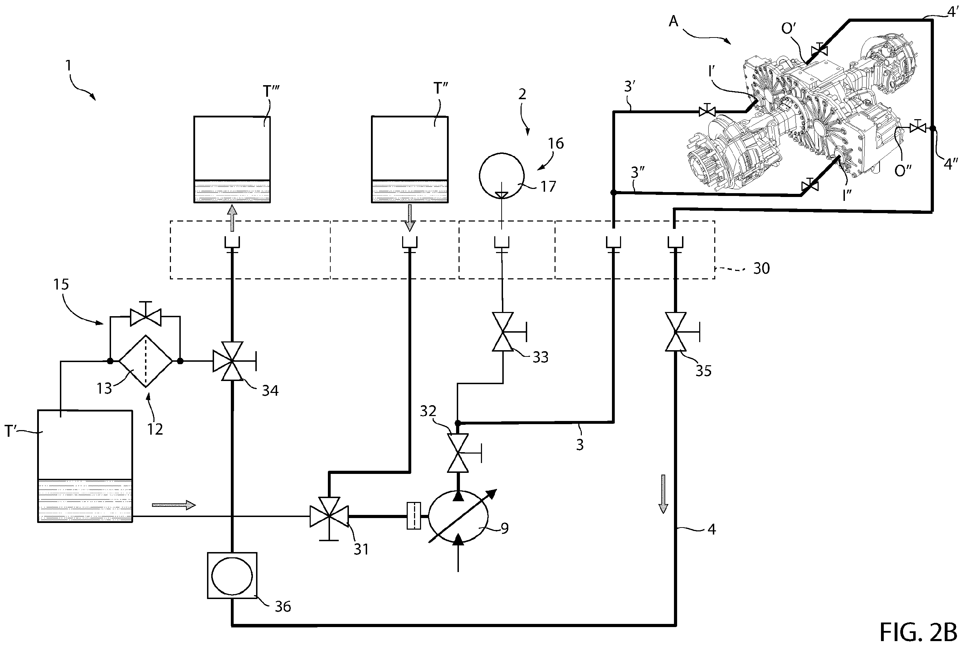

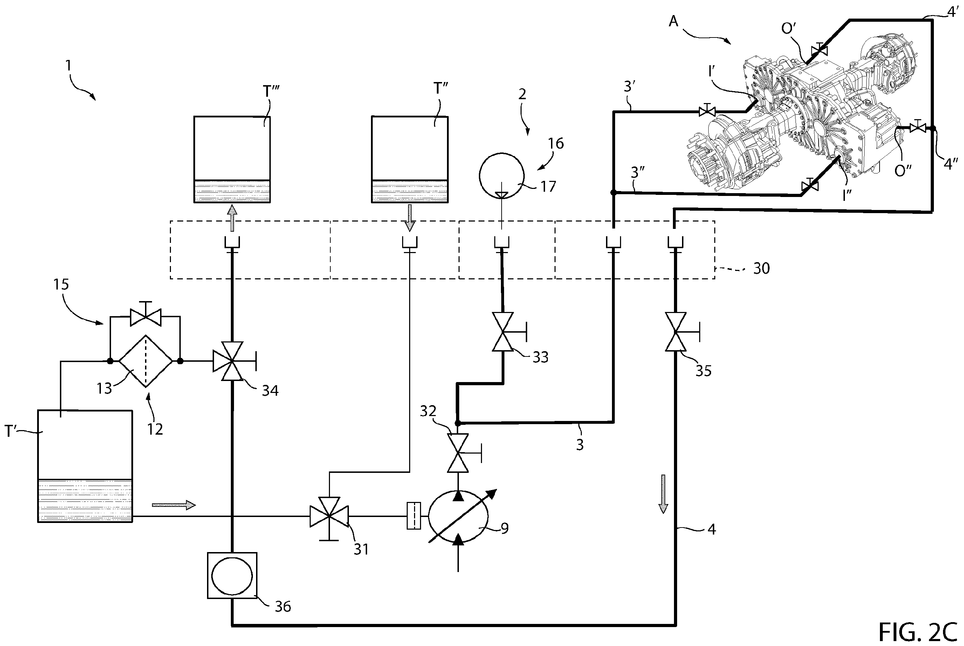

Referring to the second embodiment of the invention, shown in figure 2, the first tank T' is directly fluidly connected to main feeding and return conduits 3, 4 while the second tank T", third tank T‴ and compressed air means 16 are connected to the main feeding and return conduits 3, 4, via a connection panel 30 configured to define a plurality of ports for allowing fluid connections specified in the following.

In particular, the hydraulic arrangement 2 according to second embodiment comprises pump means 9 fluidly interposed on main feeding conduit 3 downstream to first tank T'. The hydraulic arrangement 2 further comprises first valve means 31 fluidly interposed between the first tank T' and pump means 9 and second valve means 32 fluidly interposed between pump means 9 and the e-axle inlet openings I', I".

The hydraulic arrangement 2 further comprises third valve means 33 fluidly interposed between compressed air means 16 and the main feeding conduit 3 in a position downstream to second valve means 32. In particular, third valve means 33 are placed downstream to connection panel 30.

The hydraulic arrangement 2 according to the second embodiment further comprises fourth valve means 35 fluidly interposed on main return conduit 4 downstream to connection panel 30 and inspection means 36 fluidly interposed on main return conduit 4 downstream to fourth valve means 35. Preferably inspection means 36 are realized as a transparent portion configured to understand the quality and the presence of fluid passing therethrough.

The hydraulic arrangement 2 further comprises fifth valve means 34 fluidly interposed on main return conduit 4 downstream to fourth valve means 35 and preferably downstream to inspection means 36 and a filtering portion 15 further interposed on the main return conduit 4 downstream to fifth valve means 34.

The operation of the embodiment of the invention as described above is the following.

Referring to figure 2A a cleaning operation is shown wherein the fluid contained in first tank T', that is heated at a preset temperature, e.g. comprised between 70-90 °C, for instance a liquid compound known with commercial name of "Restore Plus" is make circulate within electric machine cooling system. In such occurrence valves 31, 32, 33, 34, 35 are controlled to allow passage of cleaning fluid through pumping means 9 to the e-axle A AND then through filtering means 13 back to tank T'. The cooling fluid will corrode possible dirty deposition in the cooling jacket of the electric machine/s and the filtering means will collect such debris. The cleaning operation is caried out for the time needed in function of the typology and number of electric machines, e.g. 2 hours.

Referring to figure 2B a further cleaning operation is shown wherein the fluid contained in second tank T", for instance water. In such occurrence valves 31, 32, 33, 34, 35 are controlled to allow passage of cleaning fluid through pumping means 9 to the e-axle A and then towards third tank T‴. The water will eliminate further debris contained in the conditioning system and, moreover, eliminate any residual of cleaning fluid. The cleaning operation is caried out for the time needed in function of the typology and number of electric machines, e.g. 5 minutes.

Referring to figure 2C a purging operation is shown wherein the compressed air from compressed air means 16 is make circulate within e-axle conditioning system to eliminate the presence of the fluid precedingly flowing therein. In such occurrence valves 31, 32, 33, 34, 35 are controlled to allow passage of air from compressed air means 16 towards e-axle A and then to third tank T‴ for discharge. The operation will be carried out till any indication of fluid is completely the conditioning system for the electric machine of the e-axle A.

The filling may be executed by connecting using tanks T", T‴, properly cleaned and filled with coolant fluid.

In both the aforementioned embodiments, pump means 9 and valve means may be manual activated or may be electrically controlled. In this latter embodiment, the cleaning system 1 therefore comprises an electronic control unit (not shown) electrically connected to the pump means 9 and to valve means and comprising elaboration means configured to control their operation.

In view of the above described operations of the system the present invention relates to a cleaning method for a e-axle A via a cleaning system as described above comprising the following steps:
i. Connecting the e-axle conditioning system to the cleaning system 1;
ii. Proceeding with a purge operation by making circulate compressed air to eliminate fluid present in the e-axle conditioning system;
iii. Proceeding with a first cleaning operation by making circulate a first cleaning fluid in the e-axle conditioning system;
iv. Proceeding with a purge operation by making circulate compressed air to eliminate the first cleaning fluid present in the e-axle conditioning system;
v. Proceeding with a second cleaning operation by making circulate a second cleaning fluid in the e-axle conditioning system;
vi. Proceeding with a purge operation by making circulate compressed air to eliminate the second cleaning fluid present in the e-axle conditioning system;
vii. Filling the e-axle conditioning system with coolant fluid.

In particular, as discussed, the first cleaning fluid may be the heated corrosive fluid while the second cleaning fluid may be water.

Preferably, purge operations are carried out for a preset time, e.g. 5 minutes, or till the filtering means 22 or inspection means 36 does indicate that the conduit is empty.

The first cleaning operation is advantageously carried out for a pre-set time, e.g. 2 hours.

The second cleaning operation is advantageously carried out for a pre-set time, e.g. 5 minutes.

The aforementioned steps are advantageously elaborated by the electronic control unit whose elaboration means memorize a software code configured to carried out the described steps by controlling pump means 9 and valve means.

In view of the foregoing, the advantages of a cleaning system and related cleaning method according to the invention are apparent.

The proposed cleaning system allow to deep and quick clean the conditioning system of an e-axle. In particular, the system is easy to connect to the e-axle and may be operated by a single user.

The proposed cleaning system may be actuated manually or automatized by an electronic control unit thereby allowing a further more quick cleaning of the e-axle conditioning system.

Moreover, in the second embodiment, the presence of the connection panel 30 allows to obtain a cleaning system that is mobile and therefore that can be moved near to the e-axle in the most optimized position for the user.

It is clear that modifications can be made to the described cleaning system and method which do not extend beyond the scope of protection defined by the claims.

For example, the hydraulic topology of the cleaning system may vary without varying its function as demonstrated by the two disclosed embodiments.

Moreover, pump means, valve means, inspection means and filtering means may be of any typology.

As said, the axle may comprise one or more electric machines and thereby the related openings to be fluidly connected to the cleaning system will vary consequently.

## Claims

1. Cleaning system (1) for cleaning a conditioning system of an e-axle (A), said cleaning system (1) comprising a plurality of tanks (T', T", T‴) configured to store a respective cleaning fluid and a hydraulic arrangement (2) configured to fluidly connect said plurality of tanks (T', T", T‴) and said e-axle (A), said hydraulic arrangement (2) comprising pumping means (9), a filtering portion (12) and a compressed air source (16) that are fluidly connected together among said plurality of tanks (T', T", T‴) and said e-axle (A) to provide different cleaning operations for cleaning said conditioning system of an e-axle (A),
wherein said hydraulic arrangement (2) defines at least one inlet opening (I', I") and at least one outlet opening (O', O") configured to be fluidly connected to said conditioning system of an e-axle (A), wherein said hydraulic arrangement (2) comprises a main feeding conduit (3) fluidly interposed between at least a first tank (T') and said at least one inlet opening (I', I") and a main return conduit (4) fluidly interposed between said at least one outlet opening (O', O") and said at least a first tank (T').
wherein said pumping means (9), said filtering portion (12) and said compressed air source (16) are fluidly connected to said main feeding conduit(3),
wherein said hydraulic arrangement (2) further comprising valve means (11, 14', 14", 18) configured to be fluidly interposed among said pumping means (9), said filtering portion (12) and said compressed air source (16) and said main feeding conduit (3),
wherein said pump means (9) and said valve means are electrically controlled, said cleaning system comprising an electronic control unit electrically connected to said pump means (9) and said valve means and comprising elaboration means to control these latter.

2. Cleaning system according to claim 1, further comprising valve means (19', 19") fluidly interposed between said at least one inlet opening (I', I") and said main return conduit (4) and valve means (21', 21") fluidly interposed between said at least one outlet opening (O', O'') and said at least a first tank (T').

3. Cleaning system according to claim 1 or 2, wherein said filtering portion (12) is fluidly downstream with respect to said pumping means (9).

4. Cleaning system according to any of the preceding claims, wherein said filtering portion (12) is fluidly upstream with respect to said compressed air source (16).

5. Cleaning system according to claim 3 and 4, further comprising a by-pass portion (15) configured to selectively fluidly by-pass said filtering portion (12).

6. Cleaning system according to any of the preceding claims, comprising three tanks (T', T", T‴) all selectively connectable to said main return conduit (3) and to said main return conduit (4) via a supply module (7) configured to exclude the contemporary fluidic communication of more than one tank (T', T", T‴) to said main return conduit (3) and to said main return conduit (4).

7. Cleaning system according to any of the preceding claims further comprising filtering means (22) fluidly interposed on said main return conduit (4).

8. Cleaning system according to claim 7, wherein said filtering means (22) are visually inspectable.

9. Cleaning system according to claim 1 or 2, wherein said pumping means (9) and said compressed air source (16) are fluidly connected to said main feeding conduit(3) while said filtering portion (12) is fluidly connected to said main return conduit (4).

10. Cleaning system according to claim 9, wherein said pumping means (9) are fluidly upstream with respect to said compressed air source (16).

11. Cleaning system according to any of the preceding claims further comprising inspection means (36) that are visually inspectable fluidly interposed on said main return conduit (4) upstream to said filtering portion (12).

12. Cleaning system according to claim 9 to 11, further comprising a by-pass portion (15) configured to selectively fluidly by-pass said filtering portion (12).

13. Cleaning system according to any of claims 9 to 12, comprising three tanks (T', T", T‴), wherein a first tank (T') is fluidly connected to said main feeding conduit (3) and fluidly connectable to said main return conduit (4), a second tank (T") is fluidly connectable to said main feeding conduit (3) and a third tank (T‴) is fluidly connectable to said main return conduit (4).

14. Cleaning system according to claim 13, wherein said second and third tanks (T", T‴), said compressed air source (16), said pumping means and said filtering portions (13) are connectable to the respective main feeding or return conduit (3, 4) via valve means (31, 32, 33, 34, 35).

15. Cleaning system according to claims 13 and 14, comprising a connection panel (30) defining a plurality of ports configured to allow fluidic connection of said second and third tanks (T", T‴), said compressed air source (16), said at least one inlet and outlet openings (I', I", O', O") to said main or return feeding conduit (3, 4).

16. Cleaning method for cleaning a conditioning system of an e-axle (A) via a cleaning system according to any of the preceding claims comprising the following steps:
i. Connecting the e-axle conditioning system to the cleaning system (1);
ii. Proceeding with a purge operation by making circulate compressed air to eliminate fluid present in the e-axle conditioning system;
iii. Proceeding with a first cleaning operation by making circulate a first cleaning fluid in the e-axle conditioning system;
iv. Proceeding with a purge operation by making circulate compressed air to eliminate the first cleaning fluid present in the e-axle conditioning system;
v. Proceeding with a second cleaning operation by making circulate a second cleaning fluid in the e-axle conditioning system;
vi. Proceeding with a purge operation by making circulate compressed air to eliminate the second cleaning fluid present in the e-axle conditioning system;
vii. Filling the e-axle conditioning system with coolant fluid.
